# EUROPEAN PATENT APPLICATION

(11) **EP 3 533 657 A1**
(43) Date of publication of application: **04.09.2019**
(21) Application number: 17865096.6
(22) Date of filing: 26.10.2017
(51) Int. Cl.: B60L 11/18, B60L 5/00, B60M 7/00, H02J 7/00

(54) **CHARGING SYSTEM**

(30) Priority: 27.10.2016 JP 2016210806
(71) Applicant: Kabushiki Kaisha Toshiba, Minato-ku Tokyo 105-0023 (JP); Toshiba Infrastructure Systems & Solutions Corporation, Kawasaki-shi, Kanagawa 212-0013 (JP)
(72) Inventor: TAKEHARA, Jun, Tokyo 105-8001 (JP); MIYOSHI, Fumiyasu, Kawasaki-shi Kanagawa 212-0013 (JP)
(74) Representative: AWA Sweden AB
(86) International application number: PCT/JP2017/038780
(87) International publication number: WO 2018/079679

(57) **Abstract**

A charging system according to an embodiment includes a vehicle and a charging device. The vehicle includes a power storage functional unit, a driving unit, a power reception unit, a charge controller, a third communication unit, and a fourth communication unit. The driving unit drives the vehicle with electric power discharged from the power storage functional unit. The power reception unit is disposed to be able to receive electric power supplied from the supplying unit. The charge controller charges the power storage functional unit with electric power received by the power reception unit. The third communication unit performs wireless communication with a first communication unit positioned in a first range smaller than a predetermined region based on the vehicle, and receives an identifier. The fourth communication unit transmits instruction information to a second communication unit of the charging device that is identified with the identifier received by the third communication unit, the second communication unit being positioned in a second range larger than the first range based on the vehicle.

## Description

### FIELD

Embodiments of the present invention relate to a charging system.

### BACKGROUND

Electric vehicles (EVs) that travel by electric power have been introduced to suppress global warming and to prepare for exhaustion of petroleum resources. The electric vehicles have been introduced into means of public transportation. A power storage functional unit such as a storage battery included in the electric vehicle needs to be charged. In a case of introducing the electric vehicle into a route bus, there are a method of charging the power storage functional unit once a day with electric power with which the route bus can travel a whole day, and a method of charging the power storage functional unit as occasion demands when the route bus stops at a terminal, a stopping place, and the like. With the power storage functional unit that can store electric power by which the route bus can travel a whole day, the size, the cost, and the weight thereof are increased. In contrast, by using the method of charging the power storage functional unit as occasion demands when the route bus stops at a terminal, a stopping place, and the like, the size and the cost of the power storage functional unit mounted on the route bus are reduced, and the weight of the power storage functional unit is reduced, so that a traveling distance of the route bus per unit electric power can be prolonged.

### CITATION LIST

### Patent Literature

Patent Literature 1: Japanese Patent Application Laid-open No. 2013-243922

### SUMMARY OF THE INVENTION

### Problem to be Solved by the Invention

In a case of charging the power storage functional unit of the route bus, a crew member of the route bus connects a cable included in a charger to a power reception unit of the route bus to charge the power storage functional unit. In this method, the crew member of the route bus needs to temporarily get off the route bus, and needs to connect the cable included in the charger to the power reception unit, so that it is difficult to charge the power storage functional unit in a short time. Thus, like a trolley bus, there is known a system of charging the power storage functional unit of the route bus by using a pantograph and an overhead line while the crew member is riding on the route bus.

However, also in this system, the crew member of the route bus needs to get off the route bas to input information for instructing to start and end charging of the power storage functional unit through an operation unit included in a charging device. This system may constitute a hindrance to safety confirmation, work of collecting tolls from passengers, and the like performed by the crew member of the route bus when the route bus stops at a stopping place, so that there is a demand for reducing work of the crew member required for charging the power storage functional unit to charge the power storage functional unit in a short time and cause the route bus to operate while adhering to an operation plan.

There is also a method of transmitting and receiving information for instructing to start and end charging of the power storage functional unit via wireless communication between the route bus and the charging device. However, in this case, when a plurality of charging devices are disposed at the stopping place of the route bus, it cannot be specified that wireless communication is performed with which one of the charging devices and which one of the charging devices charges the power storage functional unit, so that the information instructing to start and end charging may be transmitted to the other charging device.

### Means for Solving Problem

A charging system according to an embodiment includes a vehicle and a charging device. The charging device includes a first communication unit, a second communication unit, and a supplying unit. The first communication unit performs wireless communication with the vehicle to transmit an identifier of the charging device. The second communication unit performs wireless communication with the vehicle to receive instruction information for instructing to start or end supplying the vehicle with electric power. The supplying unit is disposed to be able to supply the vehicle positioned in a predetermined region with electric power in accordance with the received instruction information. The vehicle includes a power storage, a driving unit, a power reception, a charging controller, a third communication unit, and a fourth communication unit. The driving unit drives the vehicle with electric power discharged from the power storage functional unit. The power reception unit is disposed to be able to receive electric power supplied from the supplying unit. The charge controller charges the power storage functional unit with electric power received by the power reception unit. The third communication unit performs wireless communication with the first communication unit positioned in a first range smaller than the predetermined region based on the vehicle to receive the identifier. The fourth communication unit transmits the instruction information to the second communication unit of the charging device that is identified with the identifier received by the third communication unit, the second communication unit being positioned in a second range larger than the first range based on the vehicle.

### BRIEF DESCRIPTION OF DRAWINGS

FIG. 1 is a diagram illustrating an example of a configuration of an EV bus included in a charging system according to a first embodiment.
FIG. 2 is a diagram illustrating an example of a configuration of a charging device included in the charging system according to the first embodiment.
FIG. 3 is a diagram for explaining an example of a procedure of charging processing for a power storage functional unit of the EV bus in the charging system according to the first embodiment.
FIG. 4 is a diagram illustrating an example of a configuration of a charging device of a charging system according to a second embodiment.

### DETAILED DESCRIPTION

The following describes a charging system according to embodiments with reference to the attached drawings.

### (First Embodiment)

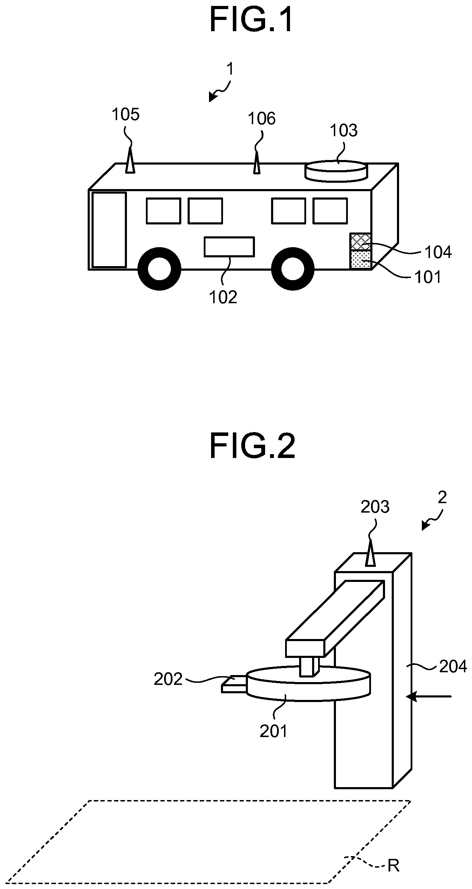

FIG. 1 is a diagram illustrating an example of a configuration of an EV bus included in a charging system according to a first embodiment. The charging system according to the present embodiment includes an electric vehicle (EV) bus 1 and a charging device 2 (refer to FIG. 2). As illustrated in FIG. 1, the EV bus 1 (an example of a vehicle) includes a power storage functional unit 101, an on-vehicle electric component 102, a power reception port 103, a charge controller 104, a communication unit 105 on the EV bus side, and a short distance communication unit 106.

The power storage functional unit 101 is constituted of a storage battery and the like. The on-vehicle electric component 102 drives the EV bus 1 with electric power discharged from the power storage functional unit 101. The power reception port 103 is an example of a power reception unit that is disposed to be able to receive electric power supplied from the charging device 2. The charge controller 104 charges the power storage functional unit 101 with electric power received by the power reception port 103.

The short distance communication unit 106 (an example of a third communication unit) is constituted of a radio frequency identifier (RFID) reader and the like. The short distance communication unit 106 performs wireless communication with an electronic tag 202 (refer to FIG. 2) that is positioned within a first communication range (for example, several meters) based on the EV bus 1, and receives an identifier of the charging device 2. In this case, the first communication range (an example of a first range) is a range smaller than a predetermined region R (described later). In the present embodiment, the short distance communication unit 106 performs wireless communication with the electronic tag 202 (refer to FIG. 2) that is present within the first communication range from a position at which the short distance communication unit 106 is disposed on the EV bus 1, and receives charging device information with the identifier. In this case, the charging device information is information with which specifications of the charging device 2 can be specified, that is, for example, information related to electric power supplied from the charging device 2, a charging method with the charging device 2, and a shape of a supplying unit 201 (refer to FIG. 2) to be connected to the power reception port 103.

The communication unit 105 on the EV bus side (an example of a fourth communication unit) performs wireless communication with a communication unit 203 on the charging device side (refer to FIG. 2) that is positioned within a second communication range (for example, 10 to 100 m) based on the EV bus 1 in accordance with a standard of wireless communication such as IEEE 802.11 and Bluetooth (registered trademark), and transmits instruction information for instructing to start and end supplying the EV bus 1 with electric power. In this case, the second communication range (an example of a second range) is a range larger than the first communication range. In the present embodiment, the communication unit 105 on the EV bus side performs wireless communication with the communication unit 203 on the charging device side (refer to FIG. 2) that is positioned within the second communication range from the position at which the communication unit 105 on the EV bus side is disposed on the EV bus 1, and transmits the instruction information.

The EV bus 1 includes a charging start button that can instruct to start charging of the power storage functional unit 101, a charging end button that can instruct to end charging of the power storage functional unit 101, a display unit that can display various kinds of information such as charging information related to charging of the power storage functional unit 101, and the like. The on-vehicle electric component 102 is constituted of a transformer, a motor, a drive device for driving the motor, a safety mechanism, an electric component, toll collecting facilities, a display unit, and the like. In the present embodiment, the on-vehicle electric component 102 is an example of a driving unit that drives the EV bus 1 with electric power discharged from the power storage functional unit 101.

FIG. 2 is a diagram illustrating an example of a configuration of the charging device included in the charging system according to the first embodiment. The charging device 2 is disposed at a stopping place and the like at which the EV bus 1 stops. As illustrated in FIG. 2, the charging device 2 includes the supplying unit 201, the electronic tag 202, the communication unit 203 on the charging device side, and a charger 204.

The charger 204 converts electric power generated from sunlight or electric power supplied from the outside into electric power having a voltage with which the power storage functional unit 101 of the EV bus 1 can be charged. The electronic tag 202 (an example of a first communication unit) is constituted of an RFID tag and the like, performs wireless communication with the EV bus 1 (short distance communication unit 106), and transmits the identifier with which the charging device 2 can be identified. In the present embodiment, the electronic tag 202 stores the identifier and the charging device information, performs wireless communication with the EV bus 1 (short distance communication unit 106), and transmits the charging device information with the identifier. The communication unit 203 on the charging device side (an example of a second communication unit) performs wireless communication with the EV bus 1 (communication unit 105 on the EV bus side) that is positioned in the predetermined region R, and receives the instruction information from the EV bus 1.

The supplying unit 201 is disposed to be able to supply the EV bus 1 stopping in the predetermined region R with electric power in accordance with the instruction information received by the communication unit 203 on the charging device side. In the present embodiment, the supplying unit 201 supplies the EV bus 1 with electric power generated by the charger 204 or electric power supplied from the outside. In the present embodiment, the charging system uses a method of supplying electric power to the power reception port 103 from the supplying unit 201 by connecting the power reception port 103 of the EV bus 1 with the supplying unit 201 of the charging device 2, but the embodiment is not limited thereto. The charging system may use a method of supplying electric power to the power reception port 103 from the supplying unit 201 by electromagnetic induction, magnetic resonance, and the like while the power reception port 103 and the supplying unit 201 are in a non-contact state.

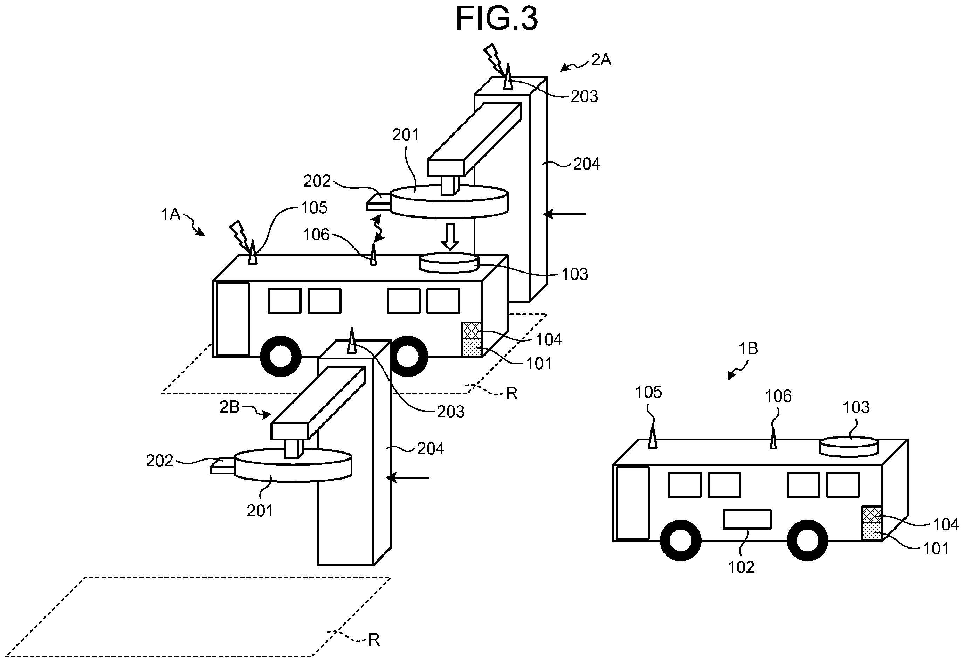

Next, the following describes a procedure of charging processing for the power storage functional unit 101 of the EV bus 1 in the charging system according to the present embodiment with reference to FIG. 3. FIG. 3 is a diagram for explaining an example of the procedure of charging processing for the power storage functional unit of the EV bus in the charging system according to the first embodiment. In this case, as illustrated in FIG. 3, exemplified is a case in which a plurality of charging devices 2A and 2B are disposed at one charging point, an EV bus 1A is charged by the charging device 2A, and an EV bus 1B is charged by the charging device 2B.

As illustrated in FIG. 3, when the EV bus 1A enters the predetermined region R in which the charging device 2A can perform charging, and the electronic tag 202 of the charging device 2A enters the first communication range of the short distance communication unit 106, the short distance communication unit 106 of the EV bus 1A receives (reads) an identifier of the charging device 2A from the electronic tag 202 of the charging device 2A. At this point, the short distance communication unit 106 of the EV bus 1A also receives (reads) charging device information of the charging device 2A with the identifier. Subsequently, the communication unit 105 on the EV bus side of the EV bus 1A determines whether specifications of the charging device 2A indicated by the received charging device information match the specifications of the charging device 2 that can charge the power storage functional unit 101 of the EV bus 1A. In the present embodiment, the communication unit 105 on the EV bus side is assumed to previously store the specifications of the charging device 2 that can charge the power storage functional unit 101 of the EV bus 1A.

If the specifications of the charging device 2A indicated by the charging device information do not match the specifications of the charging device 2 that can charge the power storage functional unit 101 of the EV bus 1A, the communication unit 105 on the EV bus side of the EV bus 1A does not perform wireless communication with the communication unit 203 on the charging device side of the charging device 2A even when the communication unit 203 on the charging device side of the charging device 2A enters the second communication range of the communication unit 105 on the EV bus side. On the other hand, if the specifications of the charging device 2A indicated by the charging device information match the specifications of the charging device 2 that can charge the power storage functional unit 101 of the EV bus 1A, the communication unit 105 on the EV bus side of the EV bus 1A displays information indicating that the power storage functional unit 101 can be charged on a display unit included in the EV bus 1A.

Thereafter, when a crew member of the EV bus 1A operates a charging start button included in the EV bus 1A to instruct to start charging of the power storage functional unit 101, the communication unit 105 on the EV bus side of the EV bus 1A performs wireless communication with the communication unit 203 on the charging device side of the charging device 2A identified with the received identifier among communication units 203 on the charging device side that have entered the second communication range, and transmits the instruction information for instructing to start charging of the power storage functional unit 101 to the communication unit 203 on the charging device side of the charging device 2A. That is, the communication unit 105 on the EV bus side transmits the instruction information to the communication unit 203 on the charging device side of the charging device 2 that is positioned within the second communication range and identified with the received identifier. At this point, the communication unit 105 on the EV bus side does not transmit the instruction information to the communication unit 203 on the charging device side of the charging device 2 other than the charging device 2A (for example, the charging device 2B) among the communication units 203 on the charging device side that have entered the second communication range.

When the communication unit 203 on the charging device side of the charging device 2A receives the instruction information for instructing to start charging of the power storage functional unit 101 from the EV bus 1A, the supplying unit 201 of the charging device 2A starts processing of supplying the EV bus 1A with electric power. Specifically, the supplying unit 201 of the charging device 2A performs connection operation to be physically connected to the power reception port 103 of the EV bus 1A stopping in the predetermined region R1. In a case of supplying the EV bus 1A with electric power in a non-contact manner, the supplying unit 201 of the charging device 2A does not necessarily perform the connection operation to be physically connected to the power reception port 103. The supplying unit 201 of the charging device 2A then supplies electric power to the power reception port 103.

When receiving electric power from the charging device 2A through the power reception port 103, the charge controller 104 of the EV bus 1A supplies the received electric power to the power storage functional unit 101 to charge the power storage functional unit 101. The charge controller 104 of the EV bus 1A detects a state of charge (SOC) of the power storage functional unit 101 during a time when the power storage functional unit 101 is being charged. In a case in which the state of charge detected by the charge controller 104 becomes a predetermined state of charge, or a case in which a predetermined time has elapsed after the power storage functional unit 101 starts to be charged, the communication unit 105 on the EV bus side of the EV bus 1A transmits the instruction information for instructing to end charging of the power storage functional unit 101 to the communication unit 203 on the charging device side of the charging device 2A.

At this point, the communication unit 105 on the EV bus side of the EV bus 1A performs wireless communication with the communication unit 203 on the charging device side of the charging device 2 (for example, the charging device 2A) identified with the received identifier among the communication units 203 on the charging device side that have entered the second communication range, and transmits the instruction information to the communication unit 203 on the charging device side of the charging device 2A. Thus, the communication unit 105 on the EV bus side does not transmit the instruction information to the communication unit 203 on the charging device side of the charging device 2B other than the charging device 2A among the communication units 203 on the charging device side that have entered the second communication range.

When the communication unit 203 on the charging device side of the charging device 2A receives the instruction information for instructing to end charging of the power storage functional unit 101 from the EV bus 1A, the supplying unit 201 of the charging device 2A stops supply of the electric power to the power reception port 103 of the EV bus 1A. Additionally, the supplying unit 201 of the charging device 2A performs release operation for releasing physical connection with the power reception port 103 of the EV bus 1A. In a case of supplying the EV bus 1A with electric power in a non-contact manner, the supplying unit 201 of the charging device 2A does not necessarily perform the release operation for releasing physical connection with the charging port 201. Accordingly, the EV bus 1A is caused to be in a state of being able to leave the predetermined region R.

Through the processing described above, the communication unit 105 on the EV bus side of the EV bus 1A can be prevented from transmitting the instruction information to the communication unit 203 on the charging device side of the other charging device 2B other than the communication unit 203 on the charging device side of the charging device 2A that is identified with the identifier received by the short distance communication unit 106 of the EV bus 1A, so that the other charging device 2B can be prevented from performing operation of charging the EV bus 1A (for example, a connection operation).

In a case in which the specifications of the charging device 2A indicated by the charging device information received together with the identifier by the short distance communication unit 106 of the EV bus 1A do not match the specifications of the charging device 2 that can charge the power storage functional unit 101 of the EV bus 1A, the communication unit 105 on the EV bus side of the EV bus 1A does not transmit the instruction information to the communication unit 203 on the charging device side of the charging device 2A, so that the charging device 2 not matching the specifications of the charging device 2 that can charge the power storage functional unit 101 of the EV bus 1A can be prevented from charging the power storage functional unit 101 of the EV bus 1A. Additionally, the crew member of the EV bus 1A is not required to get off the EV bus 1A and operate an operation unit included in the charging device 2A to input the instruction information for instructing to start or end charging of the power storage functional unit 101 in charging the power storage functional unit 101 of the EV bus 1A, so that a work burden on the crew member of the EV bus 1A can be reduced at the time of charging the power storage functional unit 101 of the EV bus 1A.

Next, the following describes a method of installing the short distance communication unit 106 included in the EV bus 1 of the charging system according to the present embodiment with reference to FIG. 2 and FIG. 3. As illustrated in FIG. 2 and FIG. 3, the short distance communication unit 106 of the EV bus 1 has the first communication range above the EV bus 1 positioned in the predetermined region R. Specifically, the short distance communication unit 106 of the EV bus 1 is disposed on a roof of the EV bus 1, and transmits radio waves upward from the EV bus 1. Due to this, passage of the crew member, a passenger, and the like in the vicinity of the EV bus 1 can be prevented from being obstructed, and the short distance communication unit 106 can be prevented from being easily touched by the crew member, a passenger, and the like, so that the short distance communication unit 106 can be prevented from being damaged by being touched by the crew member, a passenger, and the like. It is also possible to reduce influence of radio waves transmitted from the short distance communication unit 106 on the crew member, a passenger, and the like of the EV bus 1. Additionally, information other than the identifier and the charging device information can be prevented from being received from an electronic tag (for example, an electronic tag added to a commodity and the like held by a passer-by passing the vicinity of the EV bus 1) present in the vicinity of the EV bus 1 other than the electronic tag 202 of the charging device 2.

The short distance communication unit 106 of the EV bus 1 is constituted of a phased array antenna and the like. The short distance communication unit 106 of the EV bus 1 controls intensity and directivity of the radio waves transmitted from the short distance communication unit 106 not to receive the identifier and the like from the electronic tag 202 of the other charging device 2 based on at least one of an interval to the other charging device 2 adjacent to the charging device 2 that charges the EV bus 1, the height of the electronic tag 202 included in the charging device 2 from the ground, and the height of the short distance communication unit 106 from the ground. Due to this, it is possible to reduce influence on the crew member, a passenger, and the like of the EV bus 1 from the radio waves transmitted from the short distance communication unit 106. Additionally, information other than the identifier and the charging device information can be further prevented from being received from the electronic tag present in the vicinity of the EV bus 1 other than the electronic tag 202 of the charging device 2.

Next, the following describes an example of processing of receiving the identifier performed by the short distance communication unit 106 of the EV bus 1 in the charging system according to the present embodiment with reference to FIG. 3. In the present embodiment, the electronic tag 202 of the charging device 2 is caused to be in a state of being able to transmit the identifier to the short distance communication unit 106 of the EV bus 1 on a cycle set in advance. The charging device 2 may include a plurality of electronic tags 202 at a position at which wireless communication can be performed with the short distance communication unit 106 of the EV bus 1 on a route along which the EV bus 1 enters the predetermined region R.

As illustrated in FIG. 3, the short distance communication unit 106 of the EV bus 1B performs processing of receiving the identifier from the electronic tag 202 present in the first communication range at every predetermined time (for example, 1 second) before stopping in the predetermined region R in which charging can be performed by the charging device 2B. The short distance communication unit 106 of the EV bus 1B then determines whether a plurality of identifiers received within the predetermined time are valid identifiers (an example of predetermined identifiers) and the same identifiers. In this case, the valid identifier is the identifier of the charging device 2. In the present embodiment, in a case in which a data format of the received identifier is a data format set in advance, the short distance communication unit 106 determines that the received identifier is a valid identifier.

In a case in which a plurality of identifiers (for example, five identifiers) received within the predetermined time are valid identifiers and the same identifiers, the short distance communication unit 106 of the EV bus 1B determines that the identifier of the charging device 2B that charges the EV bus 1B is received. The short distance communication unit 106 of the EV bus 1B then permits the communication unit 105 on the EV bus side of the EV bus 1B to transmit the instruction information to the charging device 2B. This configuration can widen a region in which the short distance communication unit 106 of the EV bus 1B can receive the identifier from the electronic tag 202 of the charging device 2B, and the charging device 2B to which the communication unit 105 on the EV bus side of the EV bus 1B transmits the instruction information can be quickly specified, so that it is possible to shorten a time required for starting charging of the power storage functional unit 101 of the EV bus 1B.

On the other hand, in a case in which the identifiers received within the predetermined time are different from each other, the short distance communication unit 106 of the EV bus 1B determines that the identifier of the charging device 2B that charges the EV bus 1B is not received. That is, until the time when the identifiers received within the predetermined time become the valid identifiers and the same identifiers, the short distance communication unit 106 of the EV bus 1B determines that the identifier of the charging device 2B that charges the EV bus 1B is not received, and prohibits the communication unit 105 on the EV bus side of the EV bus 1B from transmitting the instruction information. Due to this, in a case in which the identifier is erroneously received from the electronic tag 202 of the charging device 2A before the EV bus 1B stops within the predetermined region R, it is possible to prevent the identifier of the charging device 2 that charges the EV bus 1B from being determined to be received.

In a case in which at least one of the identifiers received within the predetermined time is an invalid identifier that is not the valid identifier, the short distance communication unit 106 of the EV bus 1B does not take in the invalid identifier, and determines whether the identifiers received within the predetermined time are valid identifiers and the same identifiers. In this case, the invalid identifier is an identifier set to an electronic tag not related to the present charging system, that is, for example, an identifier set to an electronic tag attached to a commodity and the like held by a passer-by passing the vicinity of the EV bus 1. The electronic tag 202 used for the present charging system has a data format that can specify the charging device 2, so that it is possible to determine whether the identifier is a valid identifier used for the present charging system depending on the data format. Due to this, even when an electronic tag having an invalid identifier is present in the vicinity of the predetermined region R, charging can be started without influencing a system operation.

Next, the following describes a timing at which the short distance communication unit 106 of the EV bus 1 in the charging system according to the present embodiment receives the identifier. In the present embodiment, the short distance communication unit 106 of the EV bus 1 acquires a traveling speed of the EV bus 1 from an external device. In a case in which the acquired traveling speed of the EV bus 1 is equal to or lower than a predetermined speed, the short distance communication unit 106 performs wireless communication with the electronic tag 202 of the charging device 2. On the other hand, in a case in which the acquired traveling speed of the EV bus 1 is higher than the predetermined speed, the short distance communication unit 106 does not perform wireless communication with the electronic tag 202 of the charging device 2. Due to this, wireless communication is performed with the electronic tag 202 of the charging device 2 only in a case in which the EV bus 1 is traveling at low speed, so that it is possible to reduce electric power required for the short distance communication unit 106 of the EV bus 1 to perform wireless communication with the electronic tag 202, and reduce possibility that a passer-by passing in the vicinity of the EV bus 1 receives radio waves transmitted from the short distance communication unit 106.

In the present embodiment, after the communication unit 105 on the EV bus side transmits the instruction information for instructing to start charging of the power storage functional unit 101 to the charging device 2, the short distance communication unit 106 does not perform wireless communication with the electronic tag 202 until charging of the power storage functional unit 101 ends. Due to this, after the charging of the power storage functional unit 101 of the EV bus 1 starts, in a case in which the identifier is erroneously received from the electronic tag 202 of the other charging device 2 due to inverter noise generated by charging of the power storage functional unit 101 or an exciting current generated by charging of the power storage functional unit 101, an error can be detected, and the charging of the power storage functional unit 101 can be prevented from stopping. Additionally, arrangement of the electronic tag 202 and the short distance communication unit 106 can be prevented from being limited by a radio wave environment when the power storage functional unit 101 is being charged.

After the charging of the power storage functional unit 101 ends, the short distance communication unit 106 of the EV bus 1 receives the identifier from the electronic tag 202 of the charging device 2 again. In a case in which the identifier is successfully received from the electronic tag 202 of the charging device 2, the charge controller 104 of the EV bus 1 displays information indicating that the power storage functional unit 101 can be charged on the display unit included in the EV bus 1. In a case in which the charging start button included in the EV bus 1 is pressed down, the communication unit 105 on the EV bus side of the EV bus 1 transmits the instruction information for instructing to start charging of the power storage functional unit 101 again to the communication unit 203 on the charging device side of the charging device 2 that is identified with the received identifier.

In this way, with the charging system according to the first embodiment, the instruction information can be prevented from being transmitted to the communication unit 203 on the charging device side of the other charging device 2 that is arranged to be adjacent to a certain charging device 2, so that the other charging device 2 other than the charging device 2 that can charge the EV bus 1 stopping in the predetermined region R can be prevented from performing operation for charging the EV bus 1.

### (Second Embodiment)

The present embodiment describes an example in which supplying the EV bus with electric power is stopped when a temperature of the supplying unit exceeds a first temperature, and after supplying the EV bus with electric power is stopped, supplying the EV bus with electric power is permitted when the temperature of the supplying unit becomes equal to or lower than a second temperature that is lower than the first temperature. In the following description, description about a configuration similar to that of the first embodiment will not be repeated.

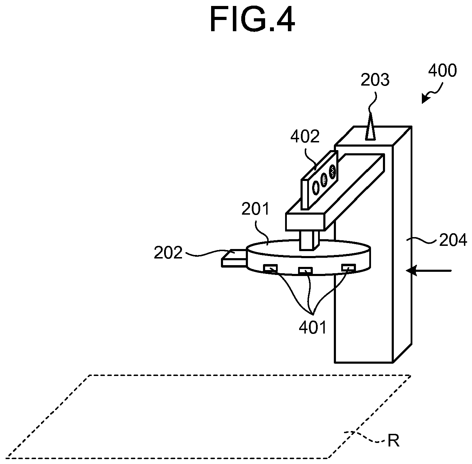

FIG. 4 is a diagram illustrating an example of a configuration of the charging device of the charging system according to a second embodiment. As illustrated in FIG. 4, in the present embodiment, a charging device 400 includes a temperature detector 401 and a charging state display unit 402. The temperature detector 401 detects a temperature of the supplying unit 201. In the present embodiment, a plurality of temperature detectors 401 are disposed at a position to be connected to the power reception port 103 of the EV bus 1 on the supplying unit 201. In a case in which a temperature detected by the temperature detector 401 exceeds the first temperature, the supplying unit 201 prohibits supplying the EV bus 1 with electric power. In this case, the first temperature is a temperature set in advance, and is an upper limit of the temperature of the supplying unit 201 at which the supplying unit 201 can safely supply electric power. Due to this, it is possible to prevent electric power from being continuously supplied to the EV bus 1 in a case in which the temperature of the supplying unit 201 is increased, and prevent the supplying unit 201 from being deteriorated, so that the supplying unit 201 can be prevented from breaking down.

In a case in which supplying the EV bus 1 with electric power is prohibited, the charging state display unit 402 displays the fact that the supplying unit 201 is being cooled, and that the power storage functional unit 101 of the EV bus 1 cannot be charged. In the present embodiment, the charging state display unit 402 displays the fact that the supplying unit 201 is being cooled and the power storage functional unit 101 of the EV bus 1 cannot be charged by turning on a red light. In a case in which the crew member of the EV bus 1 checks display on the charging state display unit 402 and recognizes that supplying the EV bus 1 with electric power is prohibited, the crew member of the EV bus 1 may wait until cooling of the supplying unit 201 ends while not moving the EV bus 1, or move to a position at which the other charging device 2 is present.

After supplying the EV bus 1 with electric power is prohibited, in a case in which the temperature detected by the temperature detector 401 becomes equal to or lower than the second temperature that is lower than the first temperature, the supplying unit 201 permits supplying the EV bus 1 with electric power. Thus, in a case in which connection with the power reception port 103 of the EV bus 1 is maintained, the supplying unit 201 starts to supply the EV bus 1 with electric power again. At this point, the charging state display unit 402 displays the fact that the power storage functional unit 101 of the EV bus 1 can be charged by turning on a blue light, for example.

In this way, with the charging system according to the second embodiment, it is possible to prevent a situation such that, when the temperature of the supplying unit 201 is increased, supplying the EV bus 1 with electric power is continued and the supplying unit 201 is deteriorated, so that the supplying unit 201 can be prevented from breaking down.

### (Third Embodiment)

The present embodiment exemplifies a case in which, when an anomaly in the charging device is detected, the communication unit on the EV bus side of the EV bus transmits, to the charging device, a reset signal for instructing to initialize the charging device. In the following description, description about the same points as those in the first and the second embodiments will not be repeated.

The EV bus 1 detects an anomaly in the charging device 2 such as temporary disconnection of communication with the charging device 2 or timeout of charging performed by the charging device 2, and stop charging of the EV bus 1 performed by the charging device 2. Additionally, in a case in which an anomaly in the charging device 2 is detected, the EV bus 1 notifies the crew member of the EV bus 1 of the anomaly in the charging device 2, or stores an occurrence history of the anomaly in the charging device 2 in a storage unit included in the EV bus 1, by displaying information indicating the anomaly in the charging device 2 on the display unit included in the EV bus 1, for example. Conventionally, in a case in which an anomaly in the charging device 2 is detected, the crew member of the EV bus 1 gets off the EV bus 1 to perform recovery work for recovering the charging device 2 from an abnormal state, but this work is complicated.

Thus, in the present embodiment, in a case of detecting an anomaly in the charging device 2, the EV bus 1 recovers the charging device 2 from the abnormal state using wireless communication between the communication unit 105 on the EV bus side and the communication unit 203 on the charging device side. Specifically, the communication unit 105 on the EV bus side functions as an anomaly detector that detects an anomaly in the charging device 2. For example, the communication unit 105 on the EV bus side detects an anomaly in the charging device 2 in a case in which electric power is not supplied to the power reception port 103 when a time set in advance has elapsed after the instruction information for instructing to start charging is transmitted to the charging device 2, or a case in which supply of electric power to the power reception port 103 is not stopped when a time set in advance has elapsed after the instruction information for instructing to end charging is transmitted to the charging device 2.

In a case of detecting an anomaly in the charging device 2, the communication unit 105 on the EV bus side transmits, to the communication unit 203 on the charging device side of the charging device 2, the reset signal for instructing to initialize the charging device 2. Due to this, in a case in which an anomaly occurs in the charging device 2, the crew member of the EV bus 1 can recover the charging device 2 from the abnormal state without getting off the EV bus 1 to perform work of recovering the charging device 2 from the abnormal state.

Additionally, in a case in which an anomaly occurs in the charging device 2, and the crew member of the EV bus 1 moves the EV bus 1 from the predetermined region R without performing work of recovering the charging device 2 from the abnormal state, the charging device 2 is maintained in the abnormal state. Thus, in a case in which wireless communication with the communication unit 105 on the EV bus side of the EV bus 1 is interrupted, the communication unit 203 on the charging device side of the charging device 2 performs processing of initializing the charging device 1. Due to this, in a case in which an anomaly occurs in the charging device 2, the charging device 2 can be recovered from the abnormal state without receiving the reset signal from the EV bus 1 or performing work for recovering the charging device 2 from the abnormal state by the crew member of the EV bus 1.

Assuming that the charging device 2 is installed at a stopping place of the EV bus 1, general people other than the crew member of the EV bus 1 and a worker who manages operation of the EV bus 1 may be able to operate the charging device 2. Thus, in the present embodiment, the charging device 2 includes an operation prohibition mechanism (for example, a lock) for causing the operation unit of the charging device 2 not to be operated. Due to this, the charging device 2 can prevent the operation unit of the charging device 2 from being operated by general people other than the crew member of the EV bus 1 and a worker who manages operation of the EV bus 1.

In this way, with the charging system according to the third embodiment, in a case in which an anomaly occurs in the charging device 2, the crew member of the EV bus 1 can recover the charging device 2 from the abnormal state without getting off the EV bus 1 to perform work of recovering the charging device 2 from the abnormal state.

As described above, according to the first to the third embodiments, it is possible to prevent the other charging device 2 other than the charging device 2 that can charge the EV bus 1 stopping in the predetermined region R from performing operation for charging the EV bus 1.

The embodiments of the present invention have been described above. However, these embodiments are merely examples, and do not intend to limit the scope of the invention. These novel embodiments can be implemented in various other forms, and can be variously omitted, replaced, and modified without departing from the gist of the present invention. These embodiments and modifications thereof are encompassed by the scope and the gist of the present invention, and also encompassed by the invention described in CLAIMS and an equivalent thereof.

## Claims

1. A charging system comprising:
a vehicle; and
a charging device, wherein
the charging device comprises:
a first communication unit configured to perform wireless communication with the vehicle to transmit an identifier of the charging device;
a second communication unit configured to perform wireless communication with the vehicle to receive instruction information for instructing to start or end supplying the vehicle with electric power; and
a supplying unit disposed to be able to supply the vehicle positioned in a predetermined region with electric power in accordance with the received instruction information, and
the vehicle comprises:
a power storage functional unit;
a driving unit configured to drive the vehicle with electric power discharged from the power storage functional unit;
a power reception unit disposed to be able to receive electric power supplied from the supplying unit;
a charge controller configured to charge the power storage functional unit with electric power received by the power reception unit;
a third communication unit configured to perform wireless communication with the first communication unit positioned in a first range smaller than the predetermined region based on the vehicle to receive the identifier; and
a fourth communication unit configured to transmit the instruction information to the second communication unit of the charging device that is identified with the identifier received by the third communication unit, the second communication unit being positioned in a second range larger than the first range based on the vehicle.

2. The charging system according to claim 1, wherein
the first communication unit performs wireless communication with the vehicle to transmit charging device information with the identifier, the charging device information being capable of specifying specifications of the charging device, and
in a case in which the specifications of the charging device indicated by the charging device information that is received together with the identifier by the third communication unit are not specifications of the charging device that is able to charge the power storage functional unit, the fourth communication unit does not perform wireless communication with the second communication unit of the charging device that is identified with the identifier.

3. The charging system according to claim 1 or 2, wherein the third communication unit does not perform wireless communication with the first communication unit until charging of the power storage functional unit ends after the fourth communication unit transmits, to the charging device, the instruction information for instructing to start charging of the power storage functional unit.

4. The charging system according to any one of claims 1 to 3, wherein the fourth communication unit receives the identifier at every predetermined time, and in a case in which a plurality of identifiers received within the predetermined time are predetermined identifiers and the same identifiers, the fourth communication unit determines that the identifier is received.

5. The charging system according to claim 4, wherein, in a case of receiving an identifier having a data format different from that of the identifier, the third communication unit does not take in the received identifier, and in a case in which the other identifiers received within the predetermined time are predetermined identifiers and the same identifiers, the third communication unit determines that the identifier is received.

6. The charging system according to any one of claims 1 to 5, wherein the third communication unit performs wireless communication with the first communication unit in a case in which a traveling speed of the vehicle is equal to or lower than a predetermined speed, and does not perform wireless communication with the first communication unit in a case in which the traveling speed of the vehicle is higher than the predetermined speed.

7. The charging system according to any one of claims 1 to 6, further comprising:
a detector configured to detect a temperature of the supplying unit, wherein
the supplying unit prohibits supplying the vehicle with electric power in a case in which the temperature detected by the detector exceeds a first temperature, and after supplying the vehicle with electric power is prohibited, permits supplying the vehicle with electric power in a case in which the temperature detected by the detector becomes equal to or lower than a second temperature that is lower than the first temperature.

8. The charging system according to any one of claims 1 to 7, further comprising:
an anomaly detector configured to detect an anomaly in the charging device, wherein,
in a case in which the anomaly detector detects an anomaly in the charging device, the fourth communication unit transmits a reset signal for instructing to initialize the charging device to the second communication unit.

9. The charging system according to claim 8, wherein the charging device further comprises a controller configured to initialize the charging device in a case in which the anomaly detector detects an anomaly in the charging device and wireless communication with the fourth communication unit is interrupted.

10. The charging system according to any one of claims 1 to 9, wherein the first range is arranged above the vehicle.
